# EUROPÄISCHE PATENTANMELDUNG

(11) **EP 4 797 518 A1**
(43) Veröffentlichungstag der Anmeldung: **26.08.2026**
(21) Anmeldenummer: 26154595.8
(22) Anmeldetag: 28.01.2026
(51) Int. Cl.: H02M 1/32, H02M 7/483

(54) **SUBMODUL FÜR EINEN MODULAREN MULTILEVELUMRICHTER UND VERFAHREN ZUR SCHNELLEN ENTLADUNG EINES ENERGIESPEICHERS DES SUBMODULS**

(30) Priorität: 18.02.2025 DE 102025105946
(71) Anmelder: Siemens Energy Global GmbH & Co. KG, 81739 München (DE)
(72) Erfinder: EULER, Ingo, 91056 Erlangen (DE); BEUERMANN, Max, 91052 Erlangen (DE); WAHLE, Marcus, 90587 Veitsbronn (DE); BÖHME, Daniel, 90480 Nürnberg (DE); STOLTZE, Torsten, 91074 Herzogenaurach (DE); SCHREMMER, Frank, 90768 Fürth (DE); PIERSTORF, Steffen, 90443 Nürnberg (DE); KRÖPPEL, Sebastian, 96114 Hirschaid (DE); SCHOLZ, Thomas, 92421 Schwandorf (DE); SCHMITT, Daniel, 92353 Postbauer-Heng (DE); LANGE, Julian, 90766 Fürth (DE)

(57) **Zusammenfassung**

Die Erfindung betrifft ein Submodul (1) für einen modularen Multilevelumrichter, wobei das Submodul (1) eine Mehrzahl von Leistungshalbleiterschalteinheiten (13, 15), die in einer Brückenschaltung angeordnet sind, wenigstens einen Energiespeicher (7) zum Speichern elektrischer Energie, wenigstens einen parallel zur Energiespeichereinheit (7) geschalteten Dauerentladewiderstand (11), wenigstens einen mechanischen Überbrückungsschalter (31), der ausgestaltet ist, Anschlussklemmen (3, 5) des Submoduls (1) in einem geschlossenen Zustand zu überbrücken, und wenigstens eine zur Steuerung der Leistungshalbleiterschalteinheiten (13, 15) und des mechanischen Überbrückungsschalters (31) ausgestaltete Steuerungseinheit (33), aufweist. Die Erfindung betrifft zudem ein Verfahren zum schnellen Entladen eines Energiespeichers (7) eines Submoduls (1). Um den Energiespeicher (7) des Submoduls (1) in einem modularen Multilevelumrichter schnell und sicher entladen zu können, ist vorgesehen, dass die Steuerungseinheit (33) ausgestaltet ist, die Leistungshalbleiterschalteinheiten (13, 15) während des Schließens oder nach dem Schließen des mechanischen Überbrückungsschalters (31) derart anzusteuern, dass der Energiespeicher (7) über den geschlossenen mechanischen Überbrückungsschalter (31) und über wenigstens eine der Leistungshalbleiterschalteinheiten (13, 15) kurzgeschlossen ist.

## Beschreibung

Die Erfindung betrifft ein Submodul für einen modularen Multilevelumrichter, wobei das Submodul eine Mehrzahl von Leistungshalbleiterschalteinheiten, die in einer Brückenschaltung angeordnet sind, wenigstens einen Energiespeicher zum Speichern elektrischer Energie, wenigstens einen parallel zum Energiespeicher geschalteten Dauerentladewiderstand, wenigstens einen mechanischen Überbrückungsschalter, der ausgestaltet ist, Anschlussklemmen des Submoduls in einem geschlossenen Zustand zu überbrücken, und wenigstens eine zur Steuerung der Leistungshalbleiterschalteinheiten und des mechanischen Überbrückungsschalters ausgestaltete Steuerungseinheit, aufweist.

Die Erfindung betrifft darüber hinaus auch einen modularen Multilevelumrichter sowie ein Verfahren zum schnellen Entladen eines Energiespeichers eines Submoduls in einem modularen Multilevelumrichter.

Umrichter sind leistungselektronische Schaltungen zum Umwandeln von elektrischer Energie. Mit Umrichtern kann Wechselstrom in Gleichstrom, Gleichstrom in Wechselstrom, Wechselstrom in Wechselstrom anderer Frequenz und/oder Amplitude oder Gleichstrom in Gleichstrom anderer Spannung umgewandelt werden. Umrichter können eine Vielzahl von gleichartigen Submodulen aufweisen, welche elektrisch in Reihe geschaltet sein können. Diese Submodule weisen jeweils mindestens zwei Leistungshalbleiterschalteinheiten und einen elektrischen Energiespeicher auf. Solche Umrichter werden als modulare Multilevelumrichter (kurz: MMC oder M2C) bezeichnet.

Durch die elektrische Reihenschaltung der Submodule lassen sich hohe Ausgangsspannungen erreichen. Die modularen Multilevelumrichter sind einfach an unterschiedliche Spannungen anpassbar (skalierbar) und eine gewünschte Ausgangsspannung kann relativ genau erzeugt werden. Modulare Multilevelumrichter werden oftmals im Hochspannungsbereich eingesetzt, beispielsweise als Umrichter bei Hochspannungs-Gleichstrom-Übertragungsanlagen (kurz: HGÜ oder HVDC) oder als Blindleistungskompensatoren bei flexiblen Drehstromübertragungssystemen (FACTS).

In modularen Multilevelumrichtern besteht eine Herausforderung unter anderem darin, wie mit defekten Submodulen umgegangen wird.

In der Regel kann im Fall eines Ausfalls eines einzelnen Submoduls des modularen Multilevelumrichters eine Abschaltung der gesamten mit Strom versorgten Anlage nicht akzeptiert werden. Deshalb muss das fehlerhafte Submodul während des Normalbetriebs in einen sicheren Zustand überführt werden und wird erst beim nächsten regulären Herunterfahren der Anlage ausgetauscht.

Um den Weiterbetrieb auch mit defekten Submodulen zu ermöglichen, sind alle Submodule mit einem mechanischen Überbrückungsschalter, auch Bypass-Schalter genannt, ausgestattet, der das jeweilige Submodul überbrücken kann. Dieser mechanische Überbrückungsschalter kann zwischen Submodulanschlüssen (oder auch Anschlussklemmen) des Submoduls installiert sein. So kann der Anlagenstrom über das fehlerhafte Submodul flie-ßen, ohne eine Beschädigung des modularen Multilevelumrichters, insbesondere durch entstehende Lichtbögen, zu bewirken.

Durch Überladung des Energiespeichers innerhalb einer Zelle der HGÜ-Anlage kann es aufgrund der Überschreitung der maximal zulässigen Betriebsspannung für einige Minuten zu Beschädigungen von Komponenten kommen. Die Auswirkungen der Belastung sind weder abschätzbar noch beherrschbar. Mögliche Folgen wie Plasmabildung und Lichtbogenentstehung während der Zerstörung dieser Komponenten können bedingt durch deren Ausmaß einen Stillstand der HGÜ-Anlage zur Folge haben Der mechanische Überbrückungsschalter kann insbesondere bei Erreichen einer definierten Spannung des Energiespeichers geschlossen werden, um den Laststrom an der mutmaßlich fehlerhaften Komponente vorbeizuleiten und so eine weitere Aufladung des Energiespeichers zu verhindern. Die gespeicherte Ladung des Energiespeichers wird nach dem Schließvorgang des Überbrückungsschalters langsam über den zumeist hochohmigen Dauerentladewiderstand entladen. Dieser Entladevorgang ist aufgrund der langen Zeitdauer bestimmt durch die große Zeitkonstante im zweistelligen Minutenbereich als problematisch einzustufen, da angrenzende Komponenten im Submodul während einem Teil dieser Entladedauer einer erhöhten Spannungsbelastung ausgesetzt sind.

Insbesondere bei einer Verringerung der betrieblichen Verluste durch den Dauerentladewiderstand über eine Erhöhung dessen Ohmwerts, ergibt sich eine vergleichsweise lange Verweildauer der Ladung im Energiespeicher und infolgedessen werden die Komponenten des Submoduls (z.B. Energiespeicher, Leistungswiderstände oder Elektronikbaugruppen) zeitlich lange der hohen Spannung ausgesetzt.

Sicherheiten in der Auslegung der Komponenten müssen sicherstellen, dass es zu keinem Fehler kommt, bei denen der Energiespeicher niederohmig kurzgeschlossen wird. Denn dadurch würde die gesamte gespeicherte Energie außerhalb der sogenannten Explosionszelle des Submoduls freigesetzt werden. Durch eine Verringerung der betrieblichen Anlagenverluste über eine Erhöhung des Ohmwerts des Entladewiderstands würde ein Komponentenausfall aufgrund der Spannungsbelastung vergrößert, da diese in dem Fall aufgrund des geringeren Entladestroms eine noch längere Zeit der Überspannung ausgesetzt wären.

Es ist daher die Aufgabe der Erfindung, ein Submodul bereitzustellen, das ein schnelles aber sicheres Entladen des Energiespeichers und einen Schutz der Komponenten ermöglicht.

Diese Aufgabe wird erfindungsgemäß gelöst durch ein Submodul nach Anspruch 1 und ein Verfahren nach Anspruch 10. Vorteilhafte Ausführungsformen sind Gegenstand der Unteransprüche.

Das erfindungsgemäße Submodul ist dadurch gekennzeichnet, dass die Steuerungseinheit ausgestaltet ist, die Leistungshalbleiterschalteinheiten während des Schließens oder nach dem Schließen des mechanischen Überbrückungsschalters derart anzusteuern, dass der Energiespeicher über den geschlossenen mechanischen Überbrückungsschalter und über wenigstens eine der Leistungshalbleiterschalteinheiten kurzgeschlossen ist.

Das erfindungsgemäße Verfahren zum schnellen Entladen eines Energiespeichers eines Submoduls in einem modularen Multilevelumrichter, wobei das Submodul eine Mehrzahl von Leistungshalbleiterschalteinheiten, die in einer Brückenschaltung angeordnet sind, wenigstens einen Energiespeicher zum Speichern elektrischer Energie, wenigstens einen parallel zur Energiespeichereinheit geschalteten Dauerentladewiderstand, wenigstens einen mechanischen Überbrückungsschalter, der ausgestaltet ist, das Submodul in einem geschlossenen Zustand zu überbrücken, und wenigstens eine zur Steuerung der Leistungshalbleiterschalteinheiten und des mechanischen Überbrückungsschalters ausgestaltete Steuerungseinheit, aufweist, sieht die folgenden Verfahrensschritte vor: Schließen des mechanischen Überbrückungsschalters und gleichzeitiges oder anschließendes Ansteuern wenigstens einer der Halbleiterschalteinheiten dergestalt, dass der Energiespeicher über den geschlossenen mechanischen Überbrückungsschalter und über die wenigstens eine geschlossene Leistungshalbleiterschalteinheit kurzgeschlossen wird.

Der erfindungsgemäße modulare Multilevelumrichter zeichnet sich dadurch aus, dass dieser wenigstens ein erfindungsgemäßes Submodul umfasst.

Das Kurzschließen des Energiespeichers über wenigstens eine der Halbleiterschalteinheiten erlaubt eine schnelle Entladung des Energiespeichers. Dadurch kann das Submodul umgehend in einen sicheren Zustand gebracht werden. Die Einwirkzeit der erhöhten Spannungsbelastung auf Komponenten des Submoduls, insbesondere auf den Energiespeicher und/oder Elektronikbaugruppen des Submoduls können auf ein Minimum reduziert werden. Ein Vorteil der Erfindung liegt dabei darin, dass der Energiespeicher des Submoduls im modularen Multilevelumrichter verbleiben kann, da er nicht zu lange der Überspannung ausgesetzt war.

Ein weiterer Vorteil der Erfindung liegt darin, dass die im Energiespeicher gespeicherte Energie in wenigstens einer Leistungshalbleiterschalteinheit umgesetzt wird. Diese wenigstens eine Leistungshalbleiterschalteinheit, die zum Kurzschließen des Energiespeichers genutzt wird, kann durch den hohen Strom zerstört werden. Die mögliche Zerstörung der Leistungshalbleiterschalteinheit kann aber bewusst akzeptiert werden, da das gesamte Submodul durch das Schließen des mechanischen Überbrückungsschalters keine für den modularen Multilevelumrichter relevante Funktion mehr besitzt.

Die Auswirkungen der Zerstörung der Leistungshalbleiterschalteinheit kann durch eine robuste Umgebung, insbesondere durch den Verbau in einer gekapselten geschützten Zelle, beherrscht werden. Die Leistungshalbleiterschalteinheit ist im Gegensatz zu den weiteren Komponenten derart im Submodul verbaut, dass das Freisetzen der Energie des Energiespeichers nicht die Funktion der benachbarten Anlagenkomponenten beeinträchtigt.

Der Dauerentladewiderstand des Submoduls ist in der Regel hochohmig und mit dem Energiespeicher verbunden, insbesondere durch eine Parallelschaltung, um eine langsame Entladung des Energiespeichers zu ermöglichen. Der Kurzschluss des Energiespeichers bedeutet daher auch eine Überbrückung des Entladewiderstands.

Wie oben ausgeführt, ist die Steuerungseinheit ausgestaltet, die Leistungshalbleiterschalteinheiten bei oder nach dem Schließen des mechanischen Überbrückungsschalters derart anzusteuern, dass der Energiespeicher über den geschlossenen mechanischen Überbrückungsschalter und über wenigstens eine der Leistungshalbleiterschalteinheiten kurzgeschlossen ist. Mit anderen Worten kann die Leistungshalbleiterschalteinheit ab dem Moment, in dem der mechanische Überbrückungsschalter das Submodul überbrückt, zur Herstellung des Kurzschlusses des Energiespeichers veranlasst werden. Je schneller dies erfolgt, desto kürzer ist der Energiespeicher der Belastung durch die Spannung ausgesetzt.

Die erfindungsgemäße Lösung kann durch verschiedene, jeweils für sich vorteilhafte, beliebig miteinander kombinierbare Ausgestaltungen weiter verbessert werden. Auf diese Ausgestaltungsformen und die mit ihnen verbundenen Vorteile ist im Folgenden eingegangen. Die mit Bezug auf das Submodul beschriebenen Verbesserungen lassen sich ebenso bei dem erfindungsgemäßen Verfahren anwenden, so dass die entsprechenden Vorteile bei der Ausführung des Verfahrens zum Tragen kommen. Gleichermaßen betreffen die mit Bezug auf das Verfahren beschriebenen Verbesserungen und deren Vorteile ebenso das erfindungsgemäße Submodul.

Gemäß einer ersten vorteilhaften Ausgestaltung des Submoduls kann die Steuerungseinheit ausgestaltet sein, eine Spannung des Energiespeichers zu überwachen und, bei Erreichen eines vordefinierten Schwellenwerts der Spannung, den mechanischen Überbrückungsschalter und die wenigstens eine Leistungshalbleiterschalteinheit zum Kurzschließen des Energiespeichers zu schließen. Das Schließen der Leistungshalbleiterschalteinheit bezieht sich auf ein Schließen wenigstens eines Leistungshalbleiters in der Leistungshalbleiterschalteinheit. Dieses Schließen kann durch das Einschalten der Leistungshalbleiterschalteinheit erfolgen. Die Begriffe "Schließen" und "Einschalten" können daher synonym verwendet werden.

Die Steuerungseinheit kann dazu insbesondere eine Überwachungseinheit zur Detektion der Spannung des Energiespeichers umfassen oder mit der Überwachungseinheit verbunden sein und Messwerte von dieser empfangen. Die Überwachungseinheit kann ausgestaltet sein, ein Signal an die Steuerungseinheit zu senden, wenn die Spannung des Energiespeichers eine vordefinierte Schwelle erreicht.

Um einen leistungsfähigen Energiespeicher zur erhalten, ist dieser vorzugsweise durch einen Kondensator gebildet oder umfasst wenigstens einen Kondensator.

Vorzugsweise umfassen die Leistungshalbleiterschalteinheiten jeweils wenigstens einen Halbleiterschalter und wenigstens eine zum Halbleiterschalter antiparallel geschaltete Freilaufdiode. Die Halbleiterschalter sind bevorzugt durch Bipolartransistoren mit isolierter Gate-Elektrode, abgekürzt "IGBT" (englisch "insulated-gate bipolar transistor") gebildet.

Besonders bevorzugt ist eine der Leistungshalbleiterschalteinheiten parallel zum mechanischen Überbrückungsschalter geschaltet, wobei die Steuerungseinheit ausgestaltet ist, diese Leistungshalbleiterschalteinheit zu schließen, bevor der mechanische Überbrückungsschalter den Energiespeicher kurzschließt. Dadurch kann eine schnellere Kommutierung des Stroms aus dem Energiespeicher ermöglicht und die Spannungsbelastung des Kondensators weiter reduziert werden. Der mechanische Überbrückungsschalter wird zudem vor hohen Stoßströmen geschützt. Diese Ausgestaltung ist weiter unten mit Blick auf das Verfahren näher erläutert.

Gemäß einer weiteren vorteilhaften Ausgestaltung des Submoduls kann das Submodul genau zwei Leistungshalbleiterschalteinheiten aufweisen, die in Halbbrückenschaltung angeordnet sind, wobei von diesen zwei Leistungshalbleiterschalteinheiten eine Leistungshalbleiterschalteinheit mit dem mechanischen Überbrückungsschalter in Reihe geschaltet ist. Diese Leistungshalbleiterschalteinheit kann zusammen mit dem mechanischen Überbrückungsschalter genutzt werden, um den Energiespeicher kurzzuschließen.

Alternativ zur Halbbrückenschaltung kann vorgesehen sein, dass das Submodul genau vier Leistungshalbleiterschalteinheiten aufweist, die in Vollbrückenschaltung angeordnet sind, wobei von diesen Leistungshalbleiterschalteinheiten eine Leistungshalbleiterschalteinheit mit dem mechanischen Überbrückungsschalter in Reihe geschaltet ist. Diese Leistungshalbleiterschalteinheit kann zusammen mit dem mechanischen Überbrückungsschalter genutzt werden, um den Energiespeicher kurzzuschließen.

Auch bei einem sogenannten Choppermodul, also einem leistungselektronischen Zerhacker, kann die vorteilhafte schnelle und sichere Entladung des Energiespeichers eingesetzt werden, wenn das Choppermodul wenigstens eine Leistungshalbleiterschalteinheitbesitzt, das mit dem mechanischen Überbrückungsschalter in Reihe geschaltet ist. Diese Leistungshalbleiterschalteinheit kann wie bei dem erfindungsgemäßen Submodul zusammen mit einem mechanischen Überbrückungsschalter des Choppermoduls genutzt werden, um den Energiespeicher kurzzuschließen.

Bei den oben genannten bevorzugten Ausgestaltungen des Submoduls wird jeweils eine Leistungshalbleiterschalteinheit des Submoduls, die Teil der Submodulschaltung ist, zur Erzeugung des Kurzschlusses genutzt. Es muss daher keine zusätzliche Leistungshalbleiterschalteinheit zur Erzeugung des Kurzschlusses vorgesehen sein. Auf diese Weise können Bauteile und somit Kosten gespart werden. Alternativ dazu ist aber nicht ausgeschlossen, dass zusätzliche schaltbare Elemente oder Zusatzbaugruppen, die beispielsweise nicht Teil einer Brückenschaltung sind, zur Erzeugung des Kurzschlusses genutzt werden.

Die einheitliche Verwendung einer Leistungshalbleiterschalteinheit zur Entladung des Energiespeichers bietet jedoch die Möglichkeit, dieses Entladekonzept auf andere Submodulkonfigurationen zu spiegeln. Konkret bedeutet dies die Möglichkeit der schnellen Entladung für Halbbrücke, Vollbrücke oder auch Choppermodule ohne zusätzlichen Bauteilaufwand.

Der erfindungsgemäße modulare Multilevelumrichter weist wenigstens ein erfindungsgemäßes Submodul auf. Vorzugsweise weist der modulare Multilevelumrichter eine Mehrzahl von erfindungsgemäßen Submodulen auf. Diese müssen nicht alle identisch sein. So kann eine Ausführungsform des modularen Multilevelumrichters sowohl Submodule in Halbbrückenschaltung als auch Submodule in Vollbrückenschaltung aufweisen. Darüber hinaus kann auch wenigstens ein Choppermodul im modularen Multilevelumrichter vorgesehen sein. Unabhängig von der Konfiguration des modularen Multilevelumrichters mit erfindungsgemäßen Submodulen kann der modulare Multilevelumrichter zusätzlich zum wenigstens einen erfindungsgemäßen Submodul ein oder mehrere nicht zur Erfindung gehörende Submodule umfassen.

Das erfindungsgemäße Verfahren kann dadurch weiter verbessert werden, dass eine der Leistungshalbleiterschalteinheiten des Submoduls parallel zum mechanischen Überbrückungsschalter geschaltet ist und zeitlich vor dem Schließen des mechanischen Überbrückungsschalters geschlossen wird.

Diese Verbesserung und die damit verbundenen Vorteile sind im Folgenden anhand eines Beispiels kurz beschrieben. Die Leistungshalbleiterschalteinheit, die dazu vorgesehen ist, zusammen mit dem mechanischen Überbrückungsschalter den Energiespeicher kurzzuschließen, ist dabei als erste Leistungshalbleiterschalteinheit bezeichnet. Die parallel zum mechanischen Überbrückungsschalter geschaltete Leistungshalbleiterschalteinheit wird als zweite Leistungshalbleiterschalteinheit bezeichnet. In der Regel sind die erste und die zweite Leistungshalbleiterschalteinheit in Reihe miteinander geschaltet.

Ein zeitlich auf die erste Leistungshalbleiterschalteinheit abgestimmte Einschalten der zweiten Leistungshalbleiterschalteinheit bewirkt, dass der Ladestrom für den Energiespeicher zunächst sanft von einer Freilaufdiode der ersten Leistungshalbleiterschalteinheit auf den Halbleiterschalter der zweiten Leistungshalbleiterschalteinheit erfolgt.

Der den Energiespeicher ladende Strom ersten Leistungshalbleiterschalteinheit kommutiert damit ohne lange Verzögerung (einige zehn µs) auf die zweite Leistungshalbleiterschalteinheit, so dass die Spannung im Energiespeicher nicht weiter ansteigt und die Spannungsbelastung des Energiespeichers dadurch geringer ist, als würde nur der mechanische Überbrückungsschalter alleine eingeschaltet werden, da dieser eine Verzögerungszeit von etlichen 100 µs haben kann, bevor dieser den ladenden Strom aufnimmt.

Für diese Zeitdauer kann der Energiespeicher um einige 100 V zusätzlich aufgeladen werden. Zudem ist bei dem Vorgehen vorteilhaft, dass der mechanische Überbrückungsschalter ohne einen hohen Stoßstrom geschlossen wird, da bei dessen Schließen die Spannung des Energiespeichers durch die erste Leistungshalbleiterschalteinheit aufgenommen wird.

Bei dem vorgeschlagenen weiteren Prozedere wird, nach dem der mechanische Überbrückungsschalter sicher den Strom übernommen hat, d.h. nach etwa 1 ms, die erste Leistungshalbleiterschalteinheit eingeschaltet, so dass der Energiespeicher sich über die erste Leistungshalbleiterschalteinheit und den mechanischen Überbrückungsschalter aus der nicht mehr ganz so hohen Spannung rasch in einem Kurzschluss entlädt, wobei die Energie im Wesentlichen wieder nur in der sog. Explosionszelle freigesetzt wird, da der mechanische Überbrückungsschalter sich bereits im geschlossenen, und damit deutlich robusteren Zustand befindet, wenn er dem Stoßstrom ausgesetzt wird.

Es wird bei dieser Prozedur sowohl die Überladung des Energiespeichers über die Auslösespannung des mechanischen Überbrückungsschalters hinaus, die Stoßstrombelastung des mechanischen Überbrückungsschalters während des sensiblen Schließvorgangs, als auch eine lange Zeitdauer der hohen Spannung an den Submodul-Komponenten vermieden.

Zur weiteren Erläuterung der Erfindung wird im nachfolgenden Teil der Beschreibung auf Figuren Bezug genommen, aus denen weitere vorteilhafte Einzelheiten und mögliche Einsatzgebiete der Erfindung zu entnehmen sind. Die Figuren sind als beispielhaft zu verstehen und sollen den Erfindungscharakter zwar darlegen, ihn aber keinesfalls einengen oder gar abschließend wiedergeben. Für Elemente mit gleichem Aufbau und/oder gleicher Funktion werden stets dieselben Bezugszeichen verwendet.

Es zeigen:
Fig. 1 eine schematische Darstellung eines Submoduls eines modularen Multilevelumrichters;
Fig. 2 das Submodul aus Fig. 1 während des Ladevorgangs des Energiespeichers;
Fig. 3 das Submodul aus Fig. 1 mit geschlossenem mechanischen Überbrückungsschalter;
Fig. 4 das Submodul aus Fig. 1 während des Entladevorgangs des Energiespeichers; und
Fig. 5 das Submodul aus Fig. 1 vor dem Schließen des mechanischen Überbrückungsschalters bei einer angepassten Ausführung des Verfahrens.

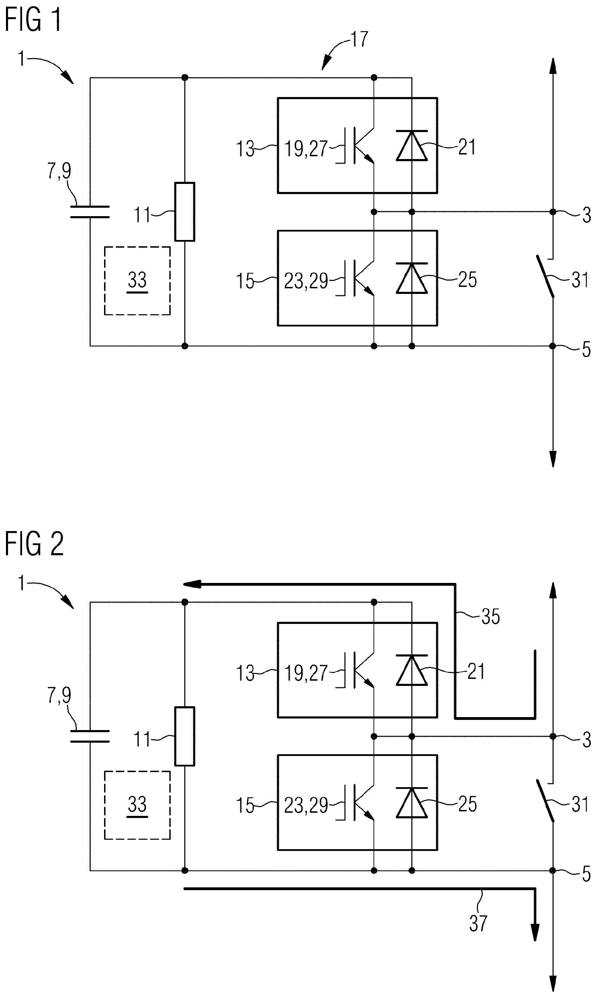

Fig. 1 zeigt eine vorteilhafte Ausführungsform des Submodul 1 für einen modularen Multilevelumrichter (nicht gezeigt). Es weist Anschlussklemmen 3 und 5 auf, über die es mit benachbarten Submodulen verbunden sein kann. Dies wird durch die im Bild nach oben und unten gerichteten Pfeile angedeutet.

Das Submodul 1 weist einen Energiespeicher 7 zum Speichern elektrischer Energie auf, der vorzugsweise durch einen Kondensator 9 gebildet ist. Das Submodul 1 weist zudem den Dauerentladewiderstand 11 auf.

Das beispielhaft dargestellte Submodul 1 weist zwei Leistungshalbleiterschalteinheiten 13 und 15 auf, die in Halbbrückenschaltung 17 angeordnet sind. Alternativ zur Halbbrückenschaltung 17 sind auch weitere, hier nicht dargestellte, Konfigurationen für das Submodul 1 möglich. Lediglich beispielhaft sei hier eine Konfiguration in Vollbrücke genannt, bei der das Submodul 1 wenigstens zwei weitere Leistungshalbleiterschalteinheiten umfasst. Ebenso ist eine Konfiguration als Choppermodul möglich.

Die Leistungshalbleiterschalteinheit 13 weist einen Halbleiterschalter 19 und eine antiparallel zum Halbleiterschalter 19 geschaltete Freilaufdiode 21 auf.

Die Leistungshalbleiterschalteinheit 15 weist entsprechend einen Halbleiterschalter 23 und eine antiparallel zum Halbleiterschalter 23 geschaltete Freilaufdiode 25 auf.

Die Halbleiterschalter 19 und 23 sind vorzugsweise durch IGBTs gebildet. Der Halbleiterschalter 19 kann als Top-IGBT 27 und der Halbleiterschalter 23 als Bot-IGBT 29 bezeichnet werden.

Das Submodul 1 weist einen mechanischen Überbrückungsschalter 31 auf, der parallel zur Leistungshalbleiterschalteinheit 15 und somit parallel zum Halbleiterschalter 23 geschaltet ist.

Der mechanische Überbrückungsschalter 31 kann das Submodul 1 überbrücken, indem er im eingeschalteten Zustand einen Kurzschluss zwischen den beiden Anschlussklemmen 3 und 5 herstellt.

Um die Komponenten des Submoduls 1 zu steuern und vorzugsweise auch zu überwachen, ist eine Steuerungseinheit 33 vorgesehen, die ausgestaltet ist, Einschaltsignale an die Halbleiterschalter 19 und 23 und an den mechanischen Überbrückungsschalter 31 zu senden. Die Steuerungseinheit 33 ist in Fig. 1 gestrichelt angedeutet. Sie kann mit den zu schaltenden Elementen datenübertragend, insbesondere auf elektrischem oder optischem Wege, verbunden sein.

In Fig. 2 ist anhand der Pfeile 35 und 37 ein Teil des Stromflusses dargestellt, der im Betrieb den Kondensator 9 aufladen kann.

Kommt es zu einem Fehler im Submodul 1, kann dieses überbrückt werden, um den Betrieb des modularen Multilevelumrichters aufrechtzuerhalten. Zum Überbrücken des Submoduls 1 wird der mechanische Überbrückungsschalter 31 geschlossen. Dies kann insbesondere durch die Steuerungseinheit 33 veranlasst werden, die mit dem mechanischen Überbrückungsschalter 31 datenübertragend verbunden sein kann.

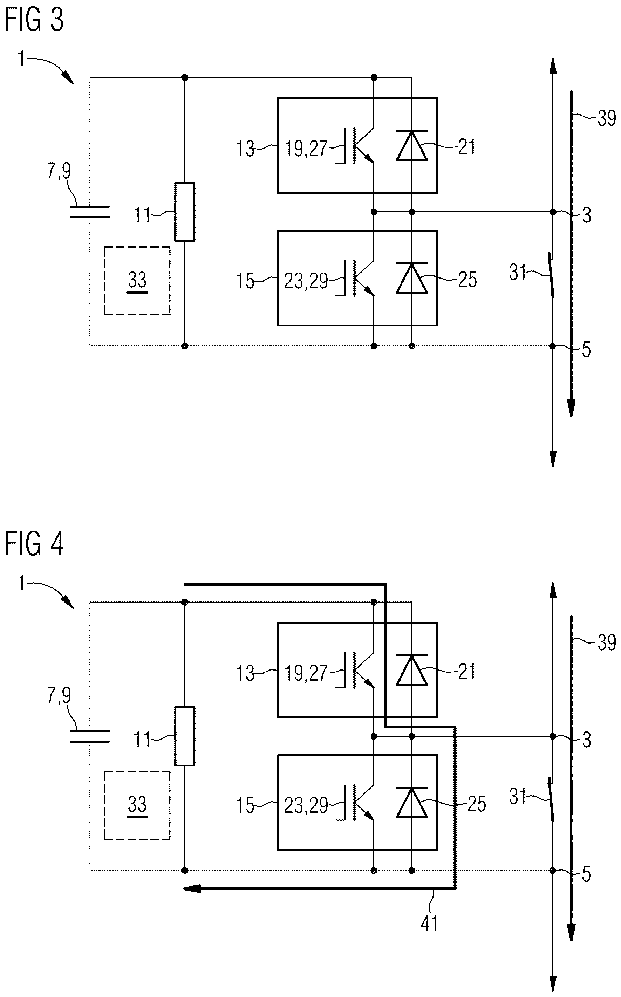

Ein Submodul 1 mit geschlossenem mechanischen Überbrückungsschalter 31 ist in Fig. 3 dargestellt. Der Strom fließt nun zwischen den beiden Anschlussklemmen 3 und 5 über den geschlossenen mechanischen Überbrückungsschalter 31. Dies ist in Fig. 3 durch den Pfeil 39 angedeutet.

Der Kondensator 9 wird nun nicht mehr weiter aufgeladen. Die im Kondensator 9 gespeicherte elektrische Energie fließt jedoch nur langsam über den Entladewiderstand 11 ab. Die dadurch lange wirkende hohe elektrische Spannung kann die Komponenten des Submoduls 1, insbesondere den Kondensator 9 selbst, schädigen.

Um den Kondensator 9 sicher, aber schneller als dies über den Entladewiderstand 11 möglich ist, zu entladen, ist vorgesehen, dass die Leistungshalbleiterschalteinheiten derart angesteuert werden, dass der Kondensator 9 kurzgeschlossen wird. Um diesen Kurzschluss zu erreichen, wird vorzugsweise die Leistungshalbleiterschalteinheit 13 angesteuert und der Top-IGBT 27 leitend geschaltet. Diese Situation ist in Fig. 4 dargestellt.

Die im Kondensator 9 gespeicherte elektrische Energie kann dann, bei geschlossenem mechanischen Überbrückungsschalter 31, über den Top-IGBT 27 und den mechanischen Überbrückungsschalter 31 entladen werden. Dies ist in Fig. 4 durch den Pfeil 41 angedeutet.

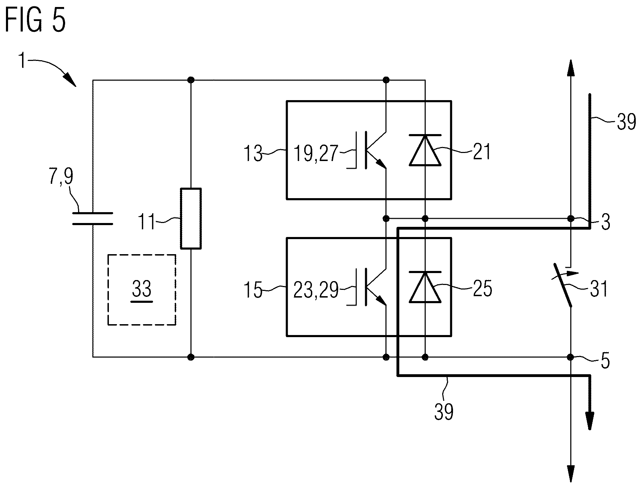

Eine optionale Verbesserung des Submoduls 1 und des Verfahrens zum schnellen Entladen des Energiespeichers 7 ist in Fig. 5 dargestellt und im Folgenden kurz beschrieben.

Die parallel zum mechanischen Überbrückungsschalter geschaltete Leistungshalbleiterschalteinheit 15, kann zeitlich vor dem Schließen des mechanischen Überbrückungsschalters 31 und somit auch vor dem Einschalten der Leistungshalbleiterschalteinheit 13 den Strom übernehmen.

Das zeitlich auf die Leistungshalbleiterschalteinheit 13 abgestimmte Einschalten der Leistungshalbleiterschalteinheit 15 bewirkt, dass der Ladestrom für den Energiespeicher 7 zunächst sanft von einer Freilaufdiode 21 der Leistungshalbleiterschalteinheit 13 auf den Halbleiterschalter 23 der Leistungshalbleiterschalteinheit 15 erfolgt.

Der den Energiespeicher 7 ladende Strom der Leistungshalbleiterschalteinheit 13 kommutiert damit ohne lange Verzögerung (einige zehn µs) auf die Leistungshalbleiterschalteinheit 15, so dass die Spannung im Energiespeicher 7 nicht weiter ansteigt und die Spannungsbelastung des Energiespeichers 7 dadurch geringer ist, als würde nur der mechanische Überbrückungsschalter 31 alleine eingeschaltet werden, da dieser eine Verzögerungszeit von etlichen 100 µs haben kann, bevor dieser den ladenden Strom aufnimmt.

Für diese Zeitdauer kann der Energiespeicher 7 um einige 100 V zusätzlich aufgeladen werden. Zudem ist bei dem Vorgehen vorteilhaft, dass der mechanische Überbrückungsschalter 31 ohne einen hohen Stoßstrom geschlossen wird, da bei dessen Schließen die Spannung des Energiespeichers 7 durch die Leistungshalbleiterschalteinheit 13 aufgenommen wird.

Bei dem vorgeschlagenen weiteren Prozedere wird, nach dem der mechanische Überbrückungsschalter 31 sicher den Strom übernommen hat, d.h. nach etwa 1 ms, die Leistungshalbleiterschalteinheit 13 eingeschaltet, so dass der Energiespeicher 7 sich über die Leistungshalbleiterschalteinheit 13 und den mechanischen Überbrückungsschalter 31 aus der nicht mehr ganz so hohen Spannung rasch in einem Kurzschluss entlädt, wobei die Energie im Wesentlichen wieder nur in einer sog. Explosionszelle (nicht dargestellt) freigesetzt wird, da der mechanische Überbrückungsschalter 31 sich bereits im geschlossenen, und damit deutlich robusteren Zustand befindet, wenn er dem Stoßstrom ausgesetzt wird.

Es wird bei dieser Prozedur sowohl die Überladung des Energiespeichers 7 über die Auslösespannung des mechanischen Überbrückungsschalters 31 hinaus, die Stoßstrombelastung des mechanischen Überbrückungsschalters 31 während des sensiblen Schließvorgangs, als auch eine lange Zeitdauer der hohen Spannung an den Komponenten des Submoduls 1 vermieden.

### Bezugszeichen

- 1: Submodul
- 3, 5: Anschlussklemmen
- 7: Energiespeicher
- 9: Kondensator
- 11: Dauerentladewiderstand
- 13, 15: Leistungshalbleiterschalteinheit
- 17: Halbbrückenschaltung
- 19: Halbleiterschalter
- 21: Freilaufdiode
- 23: Halbleiterschalter
- 25: Freilaufdiode
- 27: Top-IGBT
- 29: Bot-IGBT
- 31: mechanischer Überbrückungsschalter
- 33: Steuerungseinheit
- 35, 37, 39, 41: Richtung des Stromflusses

## Patentansprüche

1. Submodul (1) für einen modularen Multilevelumrichter, wobei das Submodul (1) eine Mehrzahl von Leistungshalbleiterschalteinheiten (13, 15), die in einer Brückenschaltung angeordnet sind, wenigstens einen Energiespeicher (7) zum Speichern elektrischer Energie, wenigstens einen parallel zur Energiespeichereinheit (7) geschalteten Dauerentladewiderstand (11), wenigstens einen mechanischen Überbrückungsschalter (31), der ausgestaltet ist, Anschlussklemmen (3, 5) des Submoduls (1) in einem geschlossenen Zustand zu überbrücken, und wenigstens eine zur Steuerung der Leistungshalbleiterschalteinheiten (13, 15) und des mechanischen Überbrückungsschalters (31) ausgestaltete Steuerungseinheit (33), aufweist, **dadurch gekennzeichnet, dass** die Steuerungseinheit (33) ausgestaltet ist, die Leistungshalbleiterschalteinheiten (13, 15) während des Schließens oder nach dem Schließen des mechanischen Überbrückungsschalters (31) derart anzusteuern, dass der Energiespeicher (7) über den geschlossenen mechanischen Überbrückungsschalter (31) und über wenigstens eine der Leistungshalbleiterschalteinheiten (13, 15) kurzgeschlossen ist.

2. Submodul (1) nach Anspruch 1, **dadurch gekennzeichnet, dass** die Steuerungseinheit (33) ausgestaltet ist, eine Spannung des Energiespeichers (7) zu überwachen und, bei Erreichen eines vordefinierten Schwellenwerts der Spannung, den mechanischen Überbrückungsschalter (31) und die wenigstens eine Leistungshalbleiterschalteinheit (13, 15) zum Kurzschließen des Energiespeichers (7) zu schließen.

3. Submodul (1) nach Anspruch 1 oder 2, **dadurch gekennzeichnet, dass** der Energiespeicher (7) ein Kondensator (9) ist oder wenigstens einen Kondensator (9) umfasst.

4. Submodul (1) nach einem der Ansprüche 1 bis 3, **dadurch gekennzeichnet, dass** eine der Leistungshalbleiterschalteinheiten (13, 15) parallel zum mechanischen Überbrückungsschalter (31) geschaltet ist, und dass die Steuerungseinheit (33) ausgestaltet ist, diese Leistungshalbleiterschalteinheit (13, 15) zu schließen, bevor der mechanische Überbrückungsschalter (33) den Energiespeicher (7) kurzschließt.

5. Submodul (1) nach einem der Ansprüche 1 bis 4, **dadurch gekennzeichnet, dass** die Leistungshalbleiterschalteinheiten (13, 15) jeweils einen Halbleiterschalter (19, 23) und eine zum Halbleiterschalter (19, 23) antiparallel geschaltete Freilaufdiode (21, 25) umfassen.

6. Submodul (1) nach Anspruch 5, **dadurch gekennzeichnet, dass** die Halbleiterschalter (19, 23) durch IGBTs (27, 29) gebildet sind.

7. Submodul (1) nach einem der Ansprüche 1 bis 6, **dadurch gekennzeichnet, dass** das Submodul (1) genau zwei Leistungshalbleiterschalteinheiten (13, 15) aufweist, die in Halbbrückenschaltung (17) angeordnet sind, wobei von diesen Leistungshalbleiterschalteinheiten (13, 15) eine Leistungshalbleiterschalteinheit (13) mit dem mechanischen Überbrückungsschalter (33) in Reihe geschaltet ist.

8. Submodul (1) nach einem der Ansprüche 1 bis 7, **dadurch gekennzeichnet, dass** das Submodul (1) genau vier Leistungshalbleiterschalteinheiten (13 ,15) aufweist, die in Vollbrückenschaltung angeordnet sind, wobei von diesen Leistungshalbleiterschalteinheiten (13, 15) eine Leistungshalbleiterschalteinheit (13) mit dem mechanischen Überbrückungsschalter (31) in Reihe geschaltet ist.

9. Modularer Multilevelumrichter mit wenigstens einem Submodul (1) nach einem der Ansprüche 1 bis 8.

10. Verfahren zum schnellen Entladen eines Energiespeichers (7) eines Submoduls (1) in einem modularen Multilevelumrichter, wobei das Submodul (1) eine Mehrzahl von Leistungshalbleiterschalteinheiten (13, 15), die in einer Brückenschaltung angeordnet sind, wenigstens einen Energiespeicher (7) zum Speichern elektrischer Energie, wenigstens einen parallel zur Energiespeichereinheit (7) geschalteten Dauerentladewiderstand (11), wenigstens einen mechanischen Überbrückungsschalter (31), der ausgestaltet ist, das Submodul (1) in einem geschlossenen Zustand zu überbrücken, und wenigstens eine zur Steuerung der Leistungshalbleiterschalteinheiten (13, 15) und des mechanischen Überbrückungsschalters (31) ausgestaltete Steuerungseinheit (33), aufweist, **gekennzeichnet durch** die Verfahrensschritte:
Schließen des mechanischen Überbrückungsschalters (31) und gleichzeitiges oder anschließendes Ansteuern wenigstens einer der Halbleiterschalteinheiten (13, 15) dergestalt, dass der Energiespeicher (7) über den geschlossenen mechanischen Überbrückungsschalter (31) und über die wenigstens eine geschlossene Leistungshalbleiterschalteinheit (13, 15) kurzgeschlossen wird.

11. Verfahren nach Anspruch 10, wobei eine der Leistungshalbleiterschalteinheiten (13, 15) des Submoduls (1) parallel zum mechanischen Überbrückungsschalter (31) geschaltet ist und zeitlich vor dem Schließen des mechanischen Überbrückungsschalters (31) geschlossen wird.
